# EUROPEAN PATENT APPLICATION

(11) **EP 1 243 827 A2**
(43) Date of publication of application: **25.09.2002**
(21) Application number: 02076120.1
(22) Date of filing: 21.03.2002
(51) Int. Cl.: F16K 31/60, F16K 41/04

(54) **Sealing device in a control rod of an oleodynamic valve**

(30) Priority: 22.03.2001 IT MI010166 U
(71) Applicant: F.LLI Tognella S.p.A., 21019 Somma Lombardo (Varese) (IT)
(72) Inventor: Tognella, Ferruccio, 21010 Arsago Seprio (Varese) (IT)
(74) Representative: Coppo, Alessandro

(57) **Abstract**

A sealing device in a control rod of an oleodynamic valve of the type comprising an outer handwheel (21) which is activated by an upper actuator group, arranged in a hollow valve body (11, 11a, 11b, 11c) which includes and extends in an upper rod (20) connected to a lower control element (18, 16, 33, 34) and to a balancing piston (15) which collaborates with openings (12, 13) for the fluid, such a device comprising a shaped and hollow bush element (26a, 26b; 126a, 126b) housed on the rod (20), which can slide therein, the bush element foreseeing a radial inner groove (29) inside which are housed at least one gasket (30) and a non-extrusion ring (31) kept in sealing engagement with the rod (20), the bush element being stably clamped to said upper actuator group. Moreover, the bush element (26a, 26b; 126a, 126b) is arranged on a threaded portion (23, 37) in a portion (11c, 11) of the hollow valve body (11) and is equipped, on at least one outer portion thereof, with a thread (27, 127).

## Description

The present invention refers to a sealing device in a control rod of an oleodynamic valve.

In the field of oleodynamic valves along the control rod, gaskets are foreseen which realise the seal in the various steps of use of the valve.

Indeed, this rod is forced to slide inside the body in order to be able to actuate the element connected to it and to allow the correct operation of the valve. Consequently, sealing elements or gaskets must be foreseen which, during such a translation, maintain the required seal in the valve.

In general, in order to carry out such a task seats are formed directly built in to an inner rod of the sealing bush group, with these gaskets being arranged in such seats.

The presence of these seats is realised firstly through not always easy treatments carried out directly on the rod which also require attachment of the gaskets which is not easy. Moreover, possible changes in shape and position of the gaskets require a new treatment of the entire rod having this seat modified near to the lower end of its inner surface.

All this is the cause of substantial problems with the need to have at the warehouse numerous pieces for the various sizes of the valves.

Moreover, in order to ease the realisation at the step of assembling the connection between the rod arranged in the sealing bush group and the lower actuator pin, a connection of the fastener type or of the bayonet type is foreseen. This type of connection, as well as realising an immediate assembly, also makes the operative connection secure.

In general, the aforementioned sealing arrangement is realised with a connection such as the one quoted above and the built in realisation of the seats for the gaskets can cause further assembly and operating problems.

A purpose of the present invention is that of realising a sealing device in a control rod of an oleodynamic valve which is simple and particularly functional.

Another purpose is that of realising a device which allows an easy adaptation in the case of a change in position of the seats and of the gaskets, without the need for an intervention on the rod as a whole.

Yet another purpose of the present invention is that of realising a device of the type quoted above which functions well and can easily be adapted in the presence of a fastener connection or a bayonet connection previously outlined.

These purposes according to the present invention are achieved by realising a sealing device in a control rod of an oleodynamic valve as set out in claim 1.

The further claims define the additional characteristics of the present invention.

The characteristics and the advantages of a sealing device in a control rod of an oleodynamic valve according to the present invention will become clearer from the following description, given as an example and not for limiting purposes, referring to the attached schematic drawings in which:
figure 1 is a longitudinal section view of an oleodynamic valve in closed position wherein a sealing device is foreseen in a control rod according to the present invention,
figure 2 is a longitudinal section view of a further example of the device in a further regulator valve shown in completely open position.

With reference to the figures, a sealing device in a control rod of an oleodynamic valve is shown which, according to the present invention, allows an easy and optimal arrangement of the gaskets.

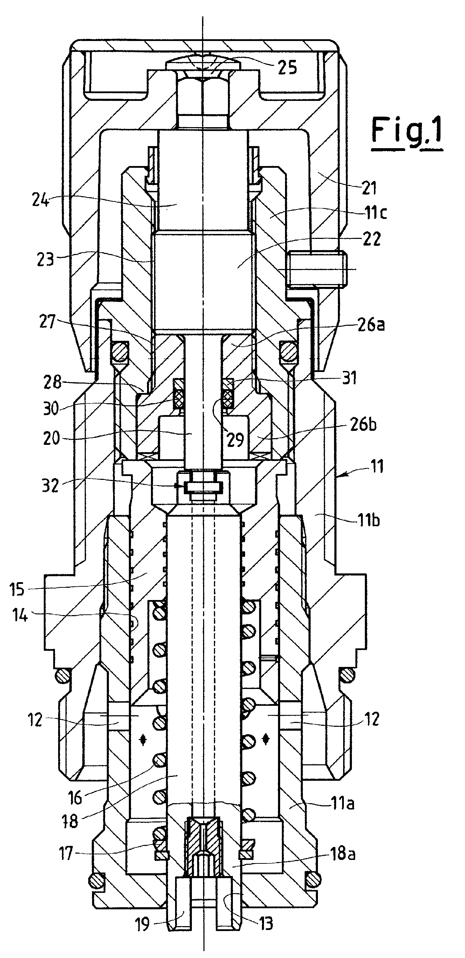

Figure 1 shows a section view of an oleodynamic regulator valve in which an outer body 11, consisting of many parts 11a, 11b, 11c, is internally hollow and equipped, in a lower portion thereof 11a, with radial openings 12, of which only two are shown, and with a lower opening 13. Inside an inner cavity 14 of the lower portion 11a of the hollow body 11 a balancing piston 15 slides, which is usually kept in a raised position. Indeed, an engagement spring 16 reacts on an abutment washer 17 arranged on a control pin 18 which extends inside the hollow outer body 11 connected to an upper actuator group. An end 18a of the control pin 18, equipped with side grooves formed by milling 19, functions as an opening and closing element of the lower opening 13 for the fluid.

The arrangement in the unit in which it is used and the operation of the valve is the usual one for a compensated valve, wherein the balancing piston can displace according to the movement and the function required.

In the upper part of the valve is arranged the sealing device realised according to the present invention, arranged to collaborate on a rod 20, with a narrowed diameter, which extends downwards making up part of an upper actuator group, directly activated by an outer handwheel 21.

An enlarged central portion 22 can slide through an outer thread thereof 23 on a complementary inner thread 23 formed in the upper portion 11c of the hollow body 11 and on one side, in other words below, it extends in the rod 20. Above, a shank 24 is foreseen upon which the handwheel 21 engages, for example through a locking screw 25.

According to the invention the rod 20 is housed in and can slide inside a shaped and hollow bush element. Indeed, in a first narrowed portion thereof 26a, it foresees on the outside a thread 27 which is complementary to the inner thread 23 formed, as already stated, in the upper portion 11c of the hollow body 11. In a second portion thereof 26b, with a greater diameter, it defines a shoulder suitable for abutting on an undercut 28 formed in the inner cavity of the upper portion 11c of the hollow outer body 11.

The bush element in a first portion thereof 26a foresees a radial inner groove 29 in which are housed at least one gasket 30 and a non-extrusion ring 31.

It should be noted how such a bush element 26a, 26b is particularly simple to make and to arrange in combination with the actuator group, independently from its realisation.

A possible enlargement of the gaskets or variation of their type, indeed, does not require any modification in the entire actuator group.

Indeed, it is sufficient to modify the bush element 26a, 26b, that is the shape of the radial inner groove 29, or even to realise more than one groove. In such a way the gasket of the appropriate type can also be arranged in a different number to that which is shown in the example.

The bush element 26a, 26b can be arranged stably in position, as well as thanks to the presence of the outer thread 27, also by foreseeing a stable connection sealing product, such as a glue like the one known as loctite.

Such a bush element 26a, 26b also eases the connection between the upper rod 20 and the lower pin 18 in the presence of an anti-rotation fastener, wholly indicated with 32. Such an anti-rotation fastener 32 is usually known as a bayonet fastener or the like.

The bush element 26a, 26b thus solves the problem of the rapid connection and control of the valve elements in a simple and practical manner.

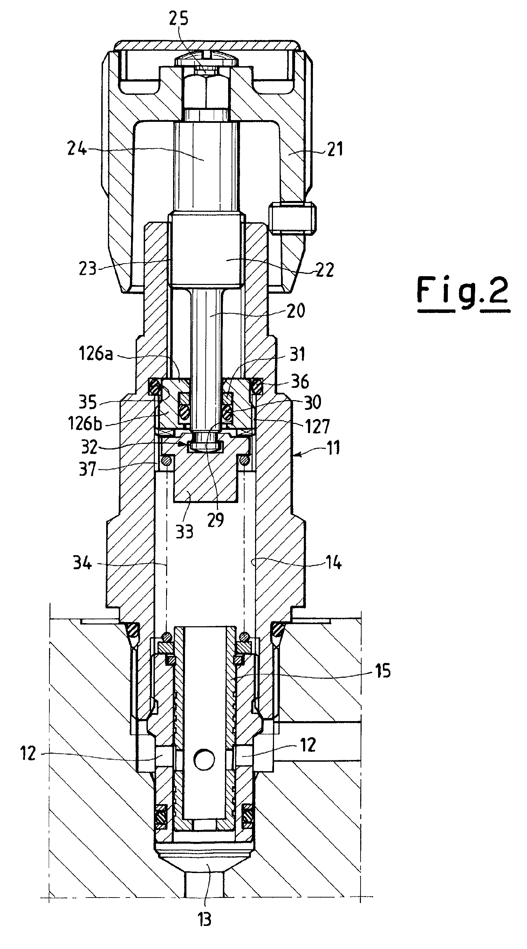

Figure 2 shows how such an arrangement can also be foreseen in a different type of oleodynamic regulation valve, in which the same reference numerals are used for parts of the valve which are alike.

Indeed, also by varying the structure of the parts which constitute it, an arrangement of the shaped and hollow bush element according to the present invention can be realised.

It should immediately be noted how the same innovative concept, independent of the shape of the lower part which is fastened with the quoted bayonet fastener 32, is applied for example in a cap 33 of a reaction spring 34 which acts upon a balancing piston 15 arranged to interact with the radial openings 12, only three of which are shown, and the lower opening 13.

A hollow outer body 11 houses, in its upper portion in an inner thread thereof 23, an enlarged central portion 22 which extends downwards in a rod 20, with a narrowed diameter, which is part of an upper actuator group, directly activated by an outer handwheel 21.

The central portion is engaged and can slide through an outer thread thereof 23 on a complementary inner thread 23 formed in the upper portion of the hollow body 11.

Also in this second example of the invention, the rod 20 is housed and can slide inside a shaped and hollow bush element.. The bush element in this example has a first narrowed upper portion thereof 126a which, thanks to the presence of a groove 35 in the body 11, collaborates with a first gasket 36. A second lower portion with a greater diameter 126b foresees, on the outside, a thread 127 which complements an inner thread 37 formed in a central portion of the hollow body 11.

It should be noted, moreover, just as for the first example, that the bush element 126a, 126b foresees a radial inner groove 29 in which are housed at least one gasket 30 and a non-extrusion ring 31, which collaborate with the rod 20 of the upper actuator group.

Also in this example the drawbacks of the prior art are solved by simplifying all possible arrangements of parts and of seals, even when the shape of the bush element changes, still keeping the rod of the upper actuator group unchanged. The presence of the quoted bayonet fastener substantially simplifies both the assembly and the use of the valve.

According to the present invention, a sealing device is realised which allows the reduction of the necessary torque for manually manoeuvring the control rod subjected to substantial pressures, for example in the order of 150-250 bars.

It is obvious that the man skilled in the art can identify numerous alternative arrangements which still apply the same innovative concept object of the present invention.

A sealing device in a control rod of an oleodynamic valve thus conceived is susceptible to numerous modifications and variants, all covered by the present invention; moreover, all of the details can be replaced with technically equivalent elements. In practice, the materials used, as well as the sizes, can be whatever according to the technical requirements.

## Claims

1. Sealing device in a control rod of an oleodynamic valve which is of the type which comprises an outer handwheel (21) which is activated by an upper actuator group, arranged in a hollow valve body (11, 11a, 11b, 11c) which includes and extends in an upper rod (20) connected to a lower control element (18, 16, 33, 34) and to a balancing piston (15) which collaborates with openings (12, 13) for the fluid, **characterised in that** the aforementioned device comprises a shaped and hollow bush element (26a, 26b; 126a, 126b) housed on said rod (20), which can slide therein, said bush element foreseeing a radial inner groove (29) inside which are housed at least one gasket (30) and a non-extrusion ring (31) kept in sealing engagement with said rod (20), said bush element being stably clamped to said upper actuator group.

2. Sealing device according to claim 1, **characterised in that** said bush element (26a, 26b; 126a, 126b) is arranged on a threaded portion (23, 37) in a portion (11c, 11) of said hollow valve body (11) and is equipped, on at least one outer portion thereof, with a thread (27, 127).

3. Sealing device according to claim 1 or 2, **characterised in that** said bush element (26a, 26b; 126a, 126b) foresees a first portion (26a, 126a) with a smaller diameter with respect to a second portion (26b, 126b) with a large diameter.

4. Sealing device according to claim 3, **characterised in that** said second portion (26b) of said bush element, with a large diameter, defines a shoulder suitable for abutting on an undercut (28) formed in the inner cavity of an upper portion (11c) of the hollow outer body (11).

5. Sealing device according to claim 3, **characterised in that** a narrowed first upper portion (126a) of said bush element, thanks to the presence of a groove (35) in said body (11), collaborates for the arrangement of a gasket (36).
